# EUROPÄISCHE PATENTSCHRIFT

(11) **EP 0 292 886 B1**
(45) Veröffentlichungstag und Bekanntmachung des Hinweises auf die Patenterteilung: **03.11.1993**
(21) Anmeldenummer: 88108080.8
(22) Anmeldetag: 20.05.1988
(51) Int. Cl.: B05D 1/40, G11B 5/842, B05C 11/02, B05D 1/30

(54) **Verfahren zum strukturfreien Auftrag von Dispersionen auf flexiblen Trägermaterialien**
Process for applying dispersions to flexible supports in such a way that no patterns occur
Procédé pour appliquer des dispersions sur des supports flexibles de façon à ne pas présenter de structure

(30) Priorität: 27.05.1987 DE 3717882
(43) Veröffentlichungstag der Anmeldung: 30.11.1988
(73) Patentinhaber: BASF Aktiengesellschaft, 67063 Ludwigshafen (DE)
(72) Erfinder: Hammon, Fritz, D-6710 Frankenthal (DE); Heim, Uwe, D-6791 Bechhofen (DE); Kaemmer, Eduard, D-6701 Dannstadt-Schauernheim (DE); Reuther, Hans-Peter, D-6700 Ludwigshafen (DE)

(56) Entgegenhaltungen:
- EP-A- 0 154 656
- EP-A- 0 210 500
- DE-A- 1 939 038
- DE-A- 2 309 159
- US-A- 4 299 186

## Beschreibung

Die Erfindung betrifft ein Verfahren zum strukturfreien Auftrag von Dispersionen, im wesentlichen bestehend aus in Lösungen organischer Polymeren homogen verteilten feinteiligen Materialien, auf flexible, bandförmige Trägermaterialien mittels eines Rakels.

Beim Auftrag von Dispersionen, wie sie beispielsweise zur Herstellung für Magnetschichten von magnetischen Aufzeichnungsträgern Anwendung finden, auf flexible bandförmige Trägermaterialien mit Hilfe eines Rakels, z.B. eines Linealgießers, kann sich als Folge der rheologischen Eigenschaften der Dispersion eine besondere charakteristische Oberflächenstruktur der resultierenden Schicht einstellen. Es ist bislang nicht gelungen diese Struktur auf eine der üblicherweise gemessenen Rheologiedaten, z.B. Fließgrenze oder Viskosität, zurückzuführen. Möglicherweise verursacht erst eine bestimmte Kombination der Rheologiedaten diese besondere Erscheinung in der Oberflächenstruktur, welche auch als "Gießstruktur" bezeichnet wird. Die Gießstruktur ist charakterisiert durch parallele in Richtung des Bahntransportes des Trägermaterials laufende zwischen 0,1 bis 0,5 mm lange gegeneinander versetzte Furchen. Die Taltiefen können auf die Höhe des "Bergkamms" bezogen 50 nm bis 500 nm betragen, außerdem sind sie etwa 30 bis 80 µm breit. Untersuchungen haben ergeben, daß sich Gießstrukturen schon bei Schichtdicken von unter 1 µm ausbilden und sich mit zunehmender Schichtdicke verstärken. Ohne wesentlichen Einfluß ist dabei die Transportgeschwindigkeit des Trägermaterials und die Ausformung des, bezogen auf die Laufrichtung des Trägermaterials, wirksamen Austrittsspalts des Rakels. Solche Gießstrukturen wirken sich im Falle der magnetischen Aufzeichnungsträger insbesondere nachteilig bei der Aufzeichnung kurzer Wellenlängen sowie im Rauschen aus.

Zum gleichzeitigen schichtförmigen Aufbringen photographischer Emulsionen auf beide Seiten einer sich bewegenden Trägerbahn sind bereits Überzugsvorrichtungen vom Rakeltyp vorgeschlagen worden (DE-A 19 39 038). Photographische Emulsionen unterscheiden sich jedoch insbesondere durch andere, durch das hydrophile System bedingte Benetzungseigenschaften sowie durch ihre viel geringere Viskosität von Dispersionen pulverförmiger magnetischer Materialien, so daß die für derartige Emulsionen herangezogenen Bescichtungseinrichtungen zur Beseitigung der Gießstruktur bei der Herstellung von Magnetschichten nicht geeignet sind.

Es bestand daher die Aufgabe, ein Verfahren zum strukturfreien Auftrag von Dispersionen bei der Beschichtung flexibler bandförmiger Trägermaterialien mit Hilfe eines Rakels bereitzustellen sowie eine hierfür geeignete Vorrichtung auszubilden.

Es wurde nun gefunden, daß sich die gestellte Aufgabe in einfacher Weise lösen läßt, wenn zum strukturfreien Auftrag einer Schicht einer Dispersion, im wesentlichen bestehend aus in einer Lösung organischer Polymerer mittels Dispergierhilfsmitteln homogen verteilter feinteiliger, pulverförmiger Materialien auf flexible, bandförmige Trägermaterialien mittels eines Rakelgießers, umfassend eine von einem Abstreifrakel und einer Rakelrückwand gebildeten Dispersionskammer, die Dispersion durch die Rakelrückwand unter einem Winkel (∝) von 30 bis 70^{°}, bezogen auf die Ebene des Trägermaterials, entgegen der Laufrichtung des Trägermaterials einer Oberfläche des Trägermaterials zugeführt wird.

Eine vorteilhafte Ausgestaltung des erfindungsgemäßen Verfahrens besteht darin, daß die Dispersion durch in der Rakelrückwand ausgebildete Nuten, deren Projektion in die Ebene des Trägermaterials mit dessen Laufrichtung einen Winkel (β) von 20 bis 50^{°} bilden, zur Oberfläche des Trägermaterials geführt wird.

Gegenstand der Erfindung sind auch Vorrichtungen zur Durchführung dieses Verfahrens.

Die Erfindung wird nachstehend anhand der folgenden Figuren näher erläutert. Es zeigt
- Figur 1: die Strömung der Dispersion beim Übergang auf das Trägermaterial TR nach dem Stand der Technik;
- Figur 2: die entgegen der Bewegungsrichtung des Trägermaterials gerichtete Strömung der Dispersion D beim Übergang auf das Trägermaterial TR;
- Figur 3: eine Draufsicht auf eine Rakelbeschichtungseinheit mit Querströmung der Dispersion D in der Dispersionskammer DK;
- Figur 4: schematische Darstellung der Strömungsrichtungen der Dispersion D beim Übergang auf das Trägermaterial TR unter Angabe der Winkel α und β;
- Figur 5: eine Draufsicht auf eine Rakelbeschichtungseinheit mit den Nuten NT zur Erzeugung einer Querströmung;
- Figur 6: die Strömung der Dispersion D innerhalb einer Nut NT der Rakelbeschichtungseinheit nach Figur 5 entlang dem Schnitt AB;
- Figur 7: die Strömung der Dispersion D innerhalb einer Nut NT.

Dispersionen im Sinne der Erfindung bestehen im wesentlichen aus feinteiligen pulverförmigen Materialien, beispielsweise TiO₂, SiO₂, Ruß, magnetische Materialien, wie Eisenoxide, Metallpulver, Chromdioxid, Ferrite, welche mit Hilfe von bekannten Dispergiereinrichtungen in Lösungen organischer Polymeren gegebenenfalls unter Verwendung von Dispergierhilfsmitteln eingearbeitet und homogen verteilt werden. Die geeigneten Lösungsmittel sind ebenso wie die speziellen Polymeren sowie das Trägermaterial, auf das die Dispersionen aufgebracht werden, allgemein bekannt und vielfach beschrieben.

Zur Durchführung des erfindungsgemäßen Verfahrens wird das bekannte Beschichtungsrakel derart umgestaltet, daß die Rakelrückwand RW der Dispersionskammer DK gegen die Bewegungsrichtung des Trägermaterials TR geneigt ist (Fig. 2). Dies steht im Gegensatz zu der nach dem Stand der Technik praktizierten Vorgehensweise (Fig. 1). Um zu gewährleisten, daß die der Dispersionskammer DK zugeführte Dispersion D eine Strömungsrichtung annimmt, welche der Neigung der Rakelrückwand entspricht, ist es zweckmäßig, daß die Länge der Neigungsfläche eine Strecke von 4 mm nicht unterschreitet. Im allgemeinen wird diese Strecke 6 bis 12 mm betragen. Der Neigungswinkel der Rakelrückwand RW entspricht dem nach dem erfindungsgemäßen Verfahren angestrebten Winkel α (Fig. 4) der Strömungsrichtung der Dispersion, d. h. er ist kleiner 90° und vorzugsweise 30° bis 70° . Ein niedrigerer Wert für diesen Winkel ist zwar möglich und führt auch zu dem angestrebten Erfolg, mit Rücksicht auf eine nicht zu große "Gießeröffnung", welche den Druck unter dem Beschichtungsrakel zu sehr ansteigen ließe, wird von diesem Winkelbereich aus Gründen der mechanischen Stabilität der Anordnung üblicherweise kein Gebrauch gemacht.

Dieses erfindungsgemäße Verfahren läßt sich noch weiter ausgestalten, indem der entgegengesetzt zur Bewegungsrichtung des Trägermaterials geführten Strömungsrichtung der Dispersion noch eine Querkomponente überlagert wird. Eine Querströmung der Dispersion durch Bewegen der Rakelbeschichtungseinheit (Fig. 3) kann wegen apparativer Begrenzungen und der üblichen Geschwindigkeit des Trägermaterials nicht genügend hoch ausgebildet werden. Eine ausreichende Querströmung der Dispersion wird durch Kanalisierung des Dispersionsstromes durch Nuten in der Rakelrückwand erreicht, wodurch dieser in der Querrichtung beschleunigt wird. Dazu werden in der breiter als üblich ausgeführten Rakelrückwand RW der Dispersionskammer DK Nuten NT (Fig. 5) in einem Winkel ß von größer 0° zur Bewegungsrichtung des Trägermaterials, vorzugsweise in einem Winkel β zwischen 20° und 50° eingefräst.

Die Breite der Nuten beträgt 1 bis 3 mm und der Abstand zueinander zwischen 1,5 und 5 mm. Die geeigneten Werte können leicht anhand eines Versuchsaufbaus ausgewählt werden. So ist beispielsweise für einen Versuchsaufbau bei einem Abstand a der Unterseite der Rakelrückwand von der Oberfläche des Trägermaterials von 100 µm die Nut bei einem Abstand untereinander von 3 mm 1,5 mm breit ausgeführt worden, wobei die Tiefe 2 mm und die Länge 12 mm betragen hat. In Figur 6 ist in einem vertikalen Schnitt durch eine der Nuten NT entlang der Schnittebene A-B der Figur 5 der Verlauf der Strömung der Dispersion in einer Beschichtungseinheit gemäß Figur 4b dargestellt. Einen horizontalen Schnitt zeigt Figur 7. Die Benetzung des Trägermaterials geschieht mit der zur Bewegungsrichtung des Trägermaterials schräg herangeführten Dispersionen an der Nutkante NK1. An der unteren Öffnung der Nut wird sie vom Trägermaterial TR in Bewegungsrichtung beschleunigt und gegen die Nutkante NK2 geführt, wo sie durch deren Schrägstellung wiederum seitwärts abgelenkt wird. Um sicher zu gehen, daß die Benetzung von den Nuten ausgeht, muß die Nut stets voll mit Dispersion versorgt werden. Hierzu ist, je nach Viskosität der Dispersion, ein Überdruck in der Dispersionskammer DK erforderlich. Dabei sind 100 bis 300 mbar bei einer üblichen Viskosität der Dispersion zwischen 200 und 300 mPa.s ausreichend. Die Wirksamkeit der Nutung der Rakelwand kann noch dadurch gesteigert werden, daß die Nuten nicht senkrecht zur Beschichtungsebene eingefräst, sondern entgegengesetzt zur Bewegungsrichtung, ähnlich wie die Rakelwand RW, geneigt werden.

Mit einem Rakel der beschriebenen Ausformung der Rakelrückwand an der Trägermaterialeinlaufseite wurden Dispersionen unterschiedlicher Rezeptur und rheologischer Daten aufgetragen, ohne daß sich bei Anwendung sehr kritischer optischer Prüfverfahren zur Beobachtung der Oberflächenrauhigkeit noch eine Beschichtungsrichtung erkennen läßt.

## Patentansprüche

1. Verfahren zum strukturfreien Auftrag einer Schicht einer Dispersion, im wesentlichen bestehend aus in einer Lösung organischer Polymerer mittels Dispergierhilfsmitteln homogen verteilter feinteiliger, pulverförmiger Materialien auf flexible, bandförmige Trägermaterialien mittels eines Rakelgießers, umfassend eine von einem Abstreifrakel und einer Rakelrückwand gebildeten Dispersionskammer, dadurch gekennzeichnet, daß beim Auftragen der Dispersion auf das Trägermaterial die Dispersion durch die Rakelrückwand unter einem Winkel (α) von 30 bis 70°, bezogen auf die Ebene des Trägermaterials, entgegen der Laufrichtung des Trägermaterials einer Oberfläche des Trägermaterials zugeführt wird.

2. Verfahren gemäß Anspruch 1, dadurch gekennzeichnet, daß die Dispersion durch in der Rakelrückwand ausgebildete Nuten, deren Projektion in die Ebene des Trägermaterials mit dessen Laufrichtung einen Winkel (β) von 20 bis 50° bilden, zur Oberfläche des Trägermaterials geführt wird.

3. Vorrichtung zum strukturfreien Auftrag einer Dispersionsschicht mittels eines Rakelgießers, umfassend eine von einem Abstreifrakel und einer Rakelrückwand gebildeten Dispersionskammer, auf eine sich kontinuierlich bewegende Bahn eines Trägermaterials, dadurch gekennzeichnet, daß die von der Dispersion benetzte Ebene der Rakelrückwand RW zumindest unmittelbar zu der zum zu beschichteten Trägermaterial hin offenen Seite unter einem Winkel (α) von 30 bis 70°, bezogen auf die Ebene des Trägermaterials, entgegen der Laufrichtung des Trägermaterials geneigt ist.

4. Vorrichtung gemäß Anspruch 3, dadurch gekennzeichnet, daß in der Rakelrückwand mehrere Nuten derart eingelassen sind, daß deren Projektion in die Ebene des Trägermaterials mit dessen Laufrichtung einen Winkel (β) von 20 bis 50° bilden.

## Claims

1. A process for applying a layer of a dispersion, essentially consisting of finely divided, pulverulent materials homogeneously distributed in a solution of organic polymers by means of a dispersant, to flexible, plate-like substrates in such a way that no structures occur, by means of a knife coater comprising a dispersion chamber formed by a doctor blade and a knife coater rear wall, wherein, when the dispersion is applied to the substrate, the dispersion is fed to a surface of the substrate through the knife coater rear wall at an angle (α) of 30 to 70°, based on the plane of the substrate, in a direction opposite to the running direction of the substrate.

2. A process as claimed in claim 1, wherein the dispersion is fed to the surface of the substrate through grooves which are formed in the knife coater rear wall and whose projection onto the plane of the substrate makes an angle (β) of from 20 to 50° with the running direction of said substrate.

3. Apparatus for applying a dispersion layer to a continuously moving web of a substrate in such a way that no structures occur, by means of a knife coater comprising a dispersion chamber formed by a doctor blade and a knife coater rear wall, wherein that plane of the knife coater rear wall RW which is wet by the dispersion is inclined, at least directly, at an angle (α) of from 30 to 70°, based on the plane of the substrate, in a direction opposite to the running direction of the substrate, relative to the side open toward the substrate to be coated.

4. Apparatus as claimed in claim 3, wherein a plurality of grooves are formed in the knife coater rear wall so that their projection onto the plane of the substrate makes an angle (β) of from 20 to 50° with the running direction of said substrate.

## Revendications

1. Procédé pour appliquer, sans formation d'une structure, une couche d'une dispersion constituée essentiellement de matériaux pulvérulents finement divisés, répartis de façon homogène, à l'aide de dispersants, dans une solution de polymères organiques, sur des matériaux support souples en forme de bande, au moyen d'un dispositif d'enduction à la racle comprenant une chambre à dispersion formée par une racle de nettoyage et une face arrière de racle, caractérisé par le fait que, lors de l'application de la dispersion sur le matériau support, la dispersion est amenée, en sens contraire au sens d'avance du matériau support, à une surface du matériau support par la face arrière de la racle, en formant un angle (alpha) de 30 à 70 degrés avec le plan du matériau support.

2. Procédé selon la revendication 1, caractérisé par le fait que la dispersion est amenée à la surface du matériau support par des rainures ménagées dans la face arrière de la racle et dont la projection sur la plan du matériau support forme un angle (β) de 20 à 50 degrés avec le sens d'avance de celui-ci.

3. Dispositif pour appliquer, sans formation d'une structure, une couche de dispersion à l'aide d'un dispositif d'enduction à la racle, comprenant une chambre à dispersion formée par une racle de nettoyage et une face arrière de racle, sur une bande de matériau support avançant en continu, caractérisé par le fait que le plan de la face arrière de la racle mouillée par la dispersion est incliné, au moins indirectement, du côté ouvert vers le matériau support à enduire, en sens contraire au sens d'avance du matériau support, en formant un angle (alpha) de 30 à 70 degrés avec le plan du matériau support.

4. Dispositif selon la revendication 3, caractérisé par le fait que dans la face arrière de la racle sont ménagées plusieurs rainures, de manière telle que leur projection sur le plan du matériau support forme un angle (β) de 20 à 50 degrés avec le sens d'avance de celui-ci.
